# EUROPEAN PATENT APPLICATION

(11) **EP 4 653 340 A1**
(43) Date of publication of application: **26.11.2025**
(21) Application number: 24750164.6
(22) Date of filing: 26.01.2024
(51) Int. Cl.: B65D 85/30, C03B 40/033

(54) **GLASS TUBE BUNDLE, FRICTION-REDUCING-MATERIAL-ATTACHED GLASS TUBE, METHOD OF PRODUCING GLASS TUBE BUNDLE, AND DEVICE FOR PRODUCING GLASS TUBE BUNDLE**

(30) Priority: 03.02.2023 JP 2023015330
(71) Applicant: Nippon Electric Glass Co., Ltd., Otsu-shi, Shiga 520-8639 (JP)
(72) Inventor: IWASAKI Takanori, Otsu-shi, Shiga 520-8639 (JP); NISHIJIMA Miyuki, Otsu-shi, Shiga 520-8639 (JP)
(74) Representative: Isarpatent
(86) International application number: PCT/JP2024/002460
(87) International publication number: WO 2024/162215

(57) **Abstract**

A glass tube bundle is provided with a plurality of glass tubes (G1), and a packaging material for bundling up the plurality of glass tubes (G1). The glass tube bundle is provided with a friction-reducing material (15) attached to an outer peripheral surface of the plurality of glass tubes (G1). Friction-reducing-material-attached glass tubes (G2) are provided with the glass tubes (G1), and the friction-reducing material (15) attached to the outer peripheral surface of the glass tubes (G1). A method of producing a glass tube bundle comprises: an attachment step for attaching the friction-reducing material (15) to the outer peripheral surface of the plurality of glass tubes (G1); and a packaging step for using the packaging material to bundle up the plurality of glass tubes (G1) having the friction-reducing material (15) attached thereto. A device for producing a glass tube bundle is provided with a friction-reducing material supply unit for supplying the friction-reducing material (15) to the plurality of glass tubes (G1).

## Description

### TECHNICAL FIELD

The present invention relates to a glass tube bundle, a friction-reducing-material-attached glass tube, a method of producing the glass tube bundle, and a device for producing the glass tube bundle.

### BACKGROUND ART

As described in Patent Document 1, a glass tube bundle including a plurality of glass tubes and a packing member that bundles the plurality of glass tubes is known.

### CITATION LIST

### PATENT LITERATURE

Patent Document 1: JP 2016-088573 A

### SUMMARY OF INVENTION

### TECHNICAL PROBLEM

The glass tubes of the above-described glass tube bundle may come into contact with each other or slide on each other, for example, in steps such as a producing step of producing the above-described glass tube bundle and a step of conveying or transporting the glass tube bundle to a processing factory for processing the glass tube bundle. This may generate scratches on the outer peripheral surfaces of the glass tubes. The scratches generated on the outer peripheral surfaces of the glass tubes in this manner become, for example, a cause of generating cracks in the glass tubes.

An object of the present invention is to provide a glass tube bundle, a friction-reducing-material-attached glass tube, a method of producing the glass tube bundle, and a device for producing the glass tube bundle that are capable of suppressing the occurrence of scratches on the outer peripheral surfaces of the glass tubes.

### SOLUTION TO PROBLEM

Aspects of a glass tube bundle, a friction-reducing-material-attached glass tube, a method of producing the glass tube bundle, and a device for producing the glass tube bundle for solving the above issues will be described.

A glass tube bundle according to aspect 1 is a glass tube bundle including a plurality of glass tubes and a packing member that bundles the plurality of glass tubes. The glass tube bundle further includes a friction-reducing material attached to outer peripheral surfaces of the plurality of glass tubes. According to this configuration, for example, the frictional resistance between the plurality of glass tubes of the glass tube bundle can be reduced by the friction-reducing material.

A glass tube bundle according to aspect 2 is the glass tube bundle according to aspect 1, in which the friction-reducing material may include a friction-reducing material made of an organic material. According to this configuration, for example, an impact applied to the glass tubes can be absorbed due to the flexibility of the friction-reducing material. In addition, when each glass tube is processed into a pharmaceutical container such as a vial, the friction-reducing material is removed by combustion due to heat required for the processing. Thus, it is easy to avoid the friction-reducing material from remaining as a residue in the pharmaceutical container serving as a final product.

A glass tube bundle according to aspect 3 is the glass tube bundle according to aspect 1 or 2, in which the friction-reducing material may have a heat resistance of 200 °C or more. According to this configuration, even when the glass tubes have a relatively high temperature, the friction-reducing material is less likely to be burned on the glass tubes. In addition, since the shape of the friction-reducing material is easily maintained, it is possible to suppress a decrease in the performance of the friction-reducing material attached to the outer peripheral surfaces of the glass tubes.

A glass tube bundle according to aspect 4 is the glass tube bundle according to any one of aspects 1 to 3, in which the friction-reducing material may include fibers. According to this configuration, the above-described effect based on the friction-reducing material can be obtained, and the friction-reducing material can be formed of, for example, an inexpensive material.

A glass tube bundle according to aspect 5 is the glass tube bundle according to aspect 4, in which each of the fibers of the friction-reducing material may have a fiber length in a range of 0.1 µm or more and 10000 µm or less, and a fiber diameter in a range of 0.1 µm or more and 1000 µm or less. According to this configuration, for example, the appearances of the glass tubes and the glass tube bundle are less likely to be impaired, and the friction-reducing material can be easily removed by washing such as water washing.

A glass tube bundle according to aspect 6 is the glass tube bundle according to aspect 4 or 5, in which the friction-reducing material may include cotton. According to this configuration, the above-described effect based on the friction-reducing material can be obtained, and the friction-reducing material can be formed of, for example, an inexpensive material.

A glass tube bundle according to aspect 7 is the glass tube bundle according to any one of aspects 1 to 6, in which the friction-reducing material may be attached at a position within 50 mm from an opening end of each of the plurality of glass tubes. In the outer peripheral surface of the glass tube, an end portion in the longitudinal direction is likely to rub against, for example, an end portion of an adjacent glass tube. Therefore, by attaching the friction-reducing material at the above-described position, the glass tube can have the reduced frictional resistance of the end portion that is easily rubbed.

A glass tube bundle according to aspect 8 is a glass tube bundle including a plurality of glass tubes and a packing member that bundles the plurality of glass tubes. The glass tube bundle includes fibers attached to outer peripheral surfaces of the plurality of glass tubes. According to this configuration, for example, the frictional resistance between the plurality of glass tubes of the glass tube bundle can be reduced by the fibers.

A friction-reducing-material-attached glass tube according to aspect 9 includes a glass tube and a friction-reducing material attached to an outer peripheral surface of the glass tube. According to this configuration, the frictional resistance between the glass tube and another member can be reduced by the friction-reducing material.

A method of producing a glass tube bundle according to aspect 10 is a method of producing a glass tube bundle including a plurality of glass tubes and a packing member that bundles the plurality of glass tubes. The method includes an attaching step of attaching a friction-reducing material to outer peripheral surfaces of the plurality of glass tubes, and a packing step of bundling, with the packing member, the plurality of glass tubes to which the friction-reducing material has been attached. According to this method, by attaching the friction-reducing material to the outer peripheral surfaces of the plurality of glass tubes, for example, the frictional resistance between adjacent glass tubes can be reduced.

A method of producing a glass tube bundle according to aspect 11 is the method according to aspect 10, in which, in the attaching step, the friction-reducing material may be electrostatically attached to the outer peripheral surfaces of the plurality of glass tubes. According to this method, the friction-reducing material can be easily removed by washing such as water washing.

A method of producing a glass tube bundle according to aspect 12 is the method according to aspect 10 or 11, in which, in the attaching step, the friction-reducing material may be attached at a position within 50 mm from an opening end of each of the plurality of glass tubes. In the outer peripheral surface of the glass tube, an end portion in the longitudinal direction is likely to rub against, for example, an end portion of an adjacent glass tube. Therefore, by attaching the friction-reducing material at the above-described position, the glass tube can have the reduced frictional resistance of the end portion that is easily rubbed.

A device for producing a glass tube bundle according to aspect 13 is a device for producing a glass tube bundle including a plurality of glass tubes and a packing member that bundles the plurality of glass tubes. The glass tube bundle further includes a friction-reducing material attached to outer peripheral surfaces of the plurality of glass tubes. The device includes a friction-reducing material supply unit that supplies the friction-reducing material to the plurality of glass tubes. According to this configuration, for example, the frictional resistance between the plurality of glass tubes of the glass tube bundle can be reduced by the friction-reducing material.

A device for producing a glass tube bundle according to aspect 14 is the device according to aspect 13, in which the friction-reducing material may include fibers, and the friction-reducing material supply unit may include a fiber aggregate that comes into contact with the outer peripheral surfaces of the plurality of glass tubes. The device may be configured to attach fibers falling off from the fiber aggregate to the outer peripheral surfaces of the plurality of glass tubes. According to this configuration, the fibers can be easily attached to the glass tubes.

A device for producing a glass tube bundle according to aspect 15 is the device according to aspect 14, in which the fiber aggregate may include a cut surface, and the cut surface of the fiber aggregate may be brought into contact with the outer peripheral surfaces of the plurality of glass tubes. Fibers constituting such a fiber aggregate easily fall off from the cut surface of the fiber aggregate. Therefore, by bringing the cut surface of the fiber aggregate and the outer peripheral surfaces of the glass tubes into contact with each other, the fibers can be efficiently attached to the outer peripheral surfaces of the glass tubes.

### ADVANTAGEOUS EFFECTS OF INVENTION

The present invention exhibits an effect of being capable of suppressing the occurrence of scratches on the outer peripheral surfaces of the glass tubes.

### BRIEF DESCRIPTION OF DRAWINGS

Fig. 1 is a perspective view illustrating a glass tube bundle according to an embodiment.
Fig. 2 is a cross-sectional view illustrating a part of the glass tube bundle in an exploded manner.
Fig. 3 is an enlarged cross-sectional view illustrating a region A in Fig. 2.
Fig. 4 is a schematic plan view illustrating a device for producing the glass tube bundle.
Fig. 5 is a schematic side view illustrating the device for producing the glass tube bundle.
Fig. 6 is a schematic side view for describing an operation of the device for producing the glass tube bundle.
Fig. 7 is a schematic side view for describing the operation of the device for producing the glass tube bundle.

### DESCRIPTION OF EMBODIMENTS

Hereinafter, embodiments of a glass tube bundle, a friction-reducing-material-attached glass tube, a method of producing the glass tube bundle, and a device for producing the glass tube bundle will be described with reference to the drawings. Note that, in the drawings, for convenience of description, components may be partially exaggerated or simplified. In addition, the dimensional ratio of each portion may be different from the actual ratio.

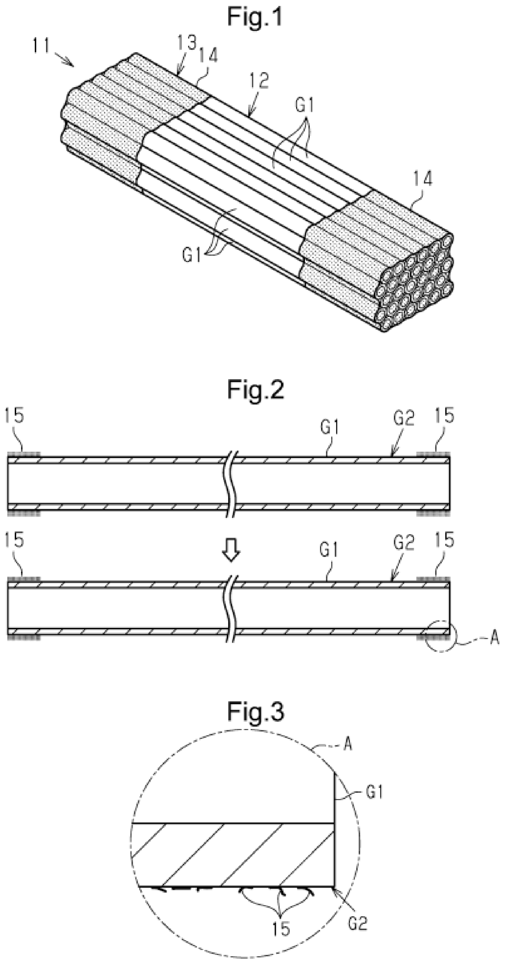

Glass Tube Bundle and Friction-reducing-material-attached Glass Tube As illustrated in Fig. 1, a glass tube bundle 11 includes a plurality of glass tubes G1 (hereinafter, the plurality of glass tubes G1 may be referred to as a glass tube group 12) and a packing member 13 that bundles the plurality of glass tubes G1. The plurality of glass tubes G1 constituting the glass tube group 12 are arranged such that the longitudinal directions thereof are parallel to each other. The glass tube group 12 has a configuration in which the plurality of glass tubes G1 arranged adjacent to each other on the same plane form one tier, and multiple tiers are stacked.

Each glass tube G1 has a straight tube shape having a predetermined length. The outer diameter of the glass tube G1 is preferably 30 mm or less, more preferably 20 mm or less, and still more preferably or 15 mm or less. The thickness of the tube wall of the glass tube G1 is preferably 1 mm or less, more preferably 0.7 mm or less, and still more preferably 0.55 mm or less. The length of the glass tube G1 is preferably, for example, 500 mm or more.

Although end portions of each glass tube G1 of the present embodiment are open, the end portions of the glass tube G1 may be closed. When the end portions of the glass tube G1 are closed, it is possible to suppress the mixing of foreign matter such as dust and dirt into the tube and condensation in the tube.

Examples of the glass of the glass tube G1 include borosilicate glass, soda-lime glass, and aluminosilicate glass. Examples of use of the glass tube G1 include use for producing a pharmaceutical container. Examples of the pharmaceutical container include a syringe, a vial, and an ampoule. The glass tube G1 can be formed of molten glass using, for example, the Danner process or the downdraw process (Vello process).

The packing member 13 of the glass tube bundle 11 includes a pair of covering members 14 that cover both end portions of the glass tube group 12. The covering members 14 are provided so as to wrap the outer peripheral surfaces of the end portions of the glass tube group 12 and the opening end surfaces of the glass tubes G1. Each covering member 14 has a bag shape. Such covering members 14 suppress the intrusion of foreign matter into each glass tube G1 from the openings of the end surfaces of the tube.

Each covering member 14 can be formed of, for example, a resin film. Examples of the resin film include a polyethylene film, a polypropylene film, a polyvinyl chloride film, a polyester-based film, a polyamide-based film, and a polylactic acid-based film. The resin film preferably has a thickness in a range of, for example, 20 µm or more and 500 µm or less. As the resin film, a heat-shrinkable film that can be shrunk by external heating is preferably used. The covering members 14 can be easily attached by shrinking the heat-shrinkable films covering the respective end portions of the glass tube group 12 by external heating.

As illustrated in FIGS. 2 and 3, a friction-reducing-material-attached glass tube G2 includes the glass tube G1 and a friction-reducing material 15 attached to the outer peripheral surface of the glass tube G1. In Fig. 2, the friction-reducing material 15 is illustrated by a dot pattern in an exaggerated manner. As illustrated in Fig. 2, the above-described glass tube bundle 11 includes the friction-reducing material 15 attached to the plurality of glass tubes G1. In the glass tube bundle 11, the friction-reducing material 15 is preferably disposed between the adjacent glass tubes G1. The friction-reducing material 15 is preferably attached to each glass tube G1 circumferentially.

Examples of the shape of the friction-reducing material 15 include a fibrous shape, a particulate shape, a spherical shape, a plate shape, and an indefinite shape. The friction-reducing material 15 is made of, for example, an organic material or an inorganic material. One type of friction-reducing material 15 may be used, or two or more types of friction-reducing materials 15 may be used in combination.

The friction-reducing material 15 preferably includes a friction-reducing material made of an organic material from the viewpoint of being relatively flexible. Examples of the organic material include a cellulose-based material (cotton, hemp, rayon, or the like), a protein-based material (silk, wool, or the like), an aromatic-polyamide-based material (aramid-based material), a polyimide-based material, and a polyamide-imide-based material.

The heat resistant temperature of the friction-reducing material 15 is preferably, for example, 200 °C or more. The heat resistant temperature of the friction-reducing material 15 indicates a melting point of a material having a melting point or a decomposition temperature of a material having no melting point.

The friction-reducing material 15 preferably includes fibers. Examples of the fibers include organic fibers. The fibers have a heat resistance of more preferably 200 °C or more and more preferably 250 °C or more. Examples of the organic fibers having a heat resistance of 200 °C or more include cellulose-based fibers (cotton, hemp, rayon, or the like), aramid fibers (aromatic-polyamide-based fibers), polyimide-based fibers, and polyamide-imide-based fibers. The friction-reducing material 15 preferably includes cotton.

Each of the fibers of the friction-reducing material 15 has a fiber length, preferably in a range of 0.1 µm or more and 10000 µm or less, more preferably in a range of 1 µm or more and 5000 µm or less, and still more preferably in a range of 5 µm or more and 1000 µm or less. Each of the fibers of the friction-reducing material 15 has a fiber diameter, preferably in a range of 0.1 µm or more and 1000 µm or less, and more preferably in a range of 0.5 µm or more and 100 µm or less.

When the fiber length of the fiber of the friction-reducing material 15 is too long, it is difficult to keep the good appearances of the glass tubes G1 and the glass tube bundle 11. In addition, the friction-reducing material 15 may be unexpectedly wound partially around the outer peripheries of the glass tubes G1, and thus it may be difficult to remove the friction-reducing material 15 by washing such as water washing. In addition, for example, when the fiber diameter of the fiber of the friction-reducing material 15 is within the above-described range, it is possible to keep the good appearances of the glass tubes G1 and the glass tube bundle 11.

The fiber length and the fiber diameter of the friction-reducing material 15 can be measured by, for example, an electronic microscope (trade name: VHX-D500, manufactured by Keyence Corporation).

As illustrated in Fig. 3, when the friction-reducing material 15 is attached to the outer peripheral surfaces of the glass tubes G1, it is preferable not to form a film. In addition, when the friction-reducing material 15 is attached to the outer peripheral surfaces of the glass tubes G1, it is preferable not to use an adhesive. That is, it is preferable to attach only the friction-reducing material 15 to the outer peripheral surfaces of the glass tubes G1. A plurality of pieces of the friction-reducing material 15 are scattered on the outer peripheral surfaces of such glass tubes G1. For example, from the viewpoint of being easily removable by washing such as water washing, it is preferable that the friction-reducing material 15 be electrostatically attached to the outer peripheral surfaces of the glass tubes G1, and it is preferable that no friction-reducing material 15 be partially wound around the outer peripheral surfaces of the glass tubes G1.

It is preferable that the friction-reducing material 15 be attached to the outer peripheral surface of each of both end portions of each glass tube G1. The friction-reducing material 15 is preferably attached at a position within 50 mm from the opening end of the glass tube G1, and more preferably attached at a position within 20 mm from the opening end of the glass tube G1.

The amount of the friction-reducing material 15 attached to the outer peripheral surface of the glass tube G1 per unit area is preferably larger at the end portion than at the central portion in the longitudinal direction of the glass tube G1. In the outer peripheral surface of the glass tube, the end portion in the longitudinal direction is likely to rub against an end portion of an adjacent glass tube due to, for example, shaking or impact during packing, transportation, or the like. The end portion of the glass tube referred to herein is, for example, a portion within 50 mm from the opening end of the glass tube G1. In addition, when a fixed amount of the friction-reducing material 15 is attached from the end portion to the central portion of the glass tube G1, it is difficult to efficiently remove the friction-reducing material 15 by washing such as water washing. Therefore, when the amount of the attached friction-reducing material 15 is larger at the end portion than at the central portion of the glass tube G1, the friction-reducing material 15 can be efficiently removed by washing such as water washing while the frictional resistance is reduced at the end portion where the glass tubes G1 are likely to rub against each other. Therefore, it is more preferable that no friction-reducing material 15 be attached to a portion other than the portion within 100 mm from the opening end of the glass tube G1, and it is particularly preferable that no friction-reducing material 15 be attached to a portion other than the portion within 50 mm from the opening end of the glass tube G1. The amount of the friction-reducing material 15 attached to the end portion of the glass tube G1 can be represented by, for example, the number of pieces of the friction-reducing material 15 attached to the outer peripheral surface of the end portion of the glass tube G1 per unit area. The number of pieces of the friction-reducing material 15 is preferably 30 or more when the unit area of the outer peripheral surface of the end portion of the glass tube G1 is 26 mm² (6.5 mm × 4 mm). The number of pieces of the friction-reducing material 15 can be checked by using, for example, an electronic microscope (trade name: VHX-D500, manufactured by Keyence Corporation).

It is preferable that no friction-reducing material 15 be substantially attached to the inner peripheral surface of the glass tube G1. This is because the glass tube G1 can be maintained at high quality.

### Device for producing Glass Tube Bundle

Next, a device for producing the glass tube bundle will be described.

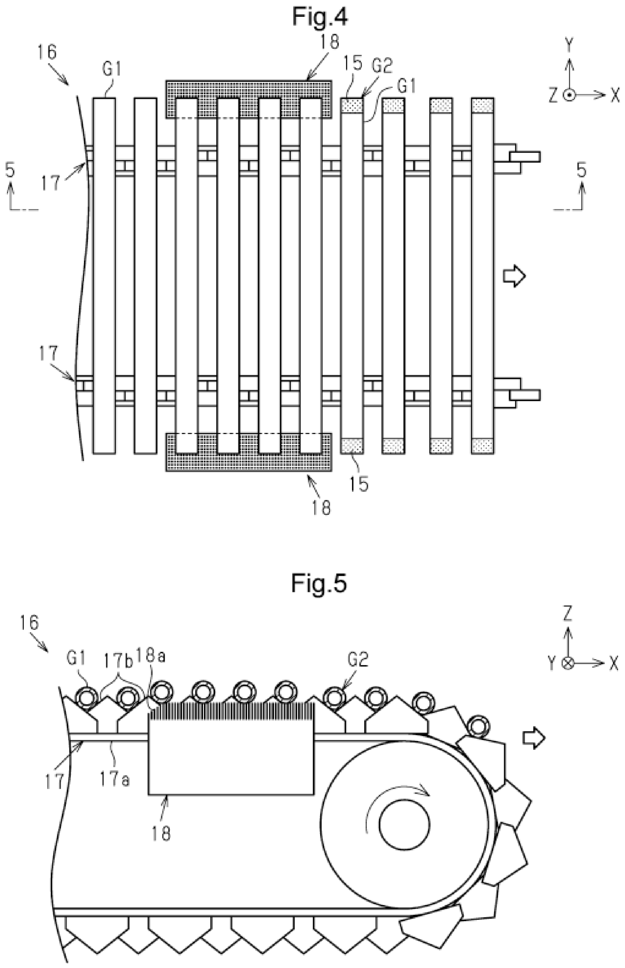

As illustrated in FIGS. 4 and 5, a device 16 for producing the glass tube bundle includes a conveyor device 17 that conveys each glass tube G1, and a friction-reducing material supply unit 18 that supplies the friction-reducing material 15 to the glass tube G1. A pair of the conveyor devices 17 are provided to correspond to both end portions of the glass tube G1. Each conveyor device 17 includes an endless belt portion 17a and a plurality of support portions 17b provided at the belt portion 17a. The pair of conveyor devices 17 convey the glass tube G1 such that the longitudinal direction of the glass tube G1 is orthogonal to a conveyance direction in plan view. Regarding the longitudinal direction of the glass tube G1, an X direction illustrated in FIGS. 4 to 7 is the conveyance direction of the glass tube G1, a direction along a Y-axis is the longitudinal direction (tube axial direction) of the glass tube G1, and a direction along a Z-axis is a vertical direction.

For example, the glass tube G1 that has passed inspection of the tube end portions is carried to the conveyor devices 17. The friction-reducing material supply unit 18 of the device 16 for producing the glass tube bundle includes a fiber aggregate. The fiber aggregate is a source for supplying fibers as the friction-reducing material 15. Examples of the fiber aggregate include woven fabric and nonwoven fabric. In the present embodiment, a fiber belt that is woven fabric is used. By bringing such a fiber aggregate into contact with the outer peripheral surface of the glass tube G1, fibers that have fallen off from the fiber aggregate can be attached to the glass tube G1. The fiber aggregate preferably has a cut surface. Fibers constituting such a fiber aggregate easily fall off from the cut surface of the fiber aggregate. Therefore, by bringing the cut surface of the fiber aggregate into contact with the outer peripheral surface of the glass tube G1, the fibers can be efficiently attached to the outer peripheral surface of the glass tube G1.

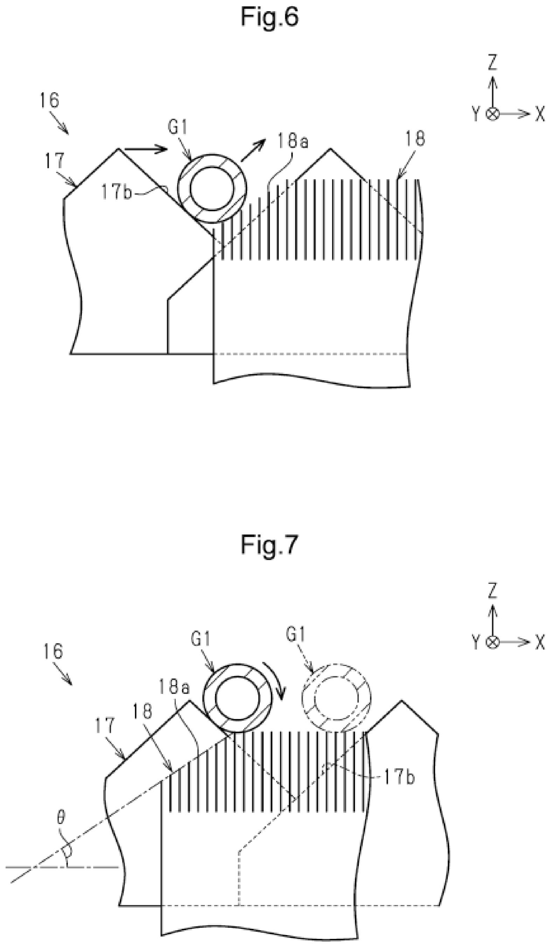

As illustrated in FIGS. 6 and 7, an upstream end portion of the fiber aggregate constituting the friction-reducing material supply unit 18 includes a slope portion 18a inclined upward in the conveyance direction of the conveyor device 17. In this case, as illustrated in Fig. 6, the glass tube G1 conveyed by the conveyor device 17 easily moves so as to ride onto the slope portion 18a of the fiber aggregate from the support portions 17b of the conveyor device 17. Accordingly, as illustrated in Fig. 7, the glass tube G1 that has ridden onto the slope portion 18a can move in the conveyance direction as indicated by a two-dot-chain line in Fig. 7 while rolling on the fiber aggregate. Therefore, the friction-reducing material 15 can be attached to the glass tube G1 circumferentially. The inclination angle θ of the slope portion 18a is preferably, for example, in a range of 5° or more and 60° or less with respect to the horizontal plane. Note that the slope portion 18a may constitute the entire upper surface of the fiber aggregate.

The device 16 for producing the glass tube bundle includes a packing device (not illustrated) disposed downstream of the conveyor devices 17. The packing device includes a collecting unit that collects the plurality of glass tubes G1 to which the friction-reducing material 15 has been attached, and a bundling unit that bundles the plurality of collected glass tubes G1 with the packing member 13. The bundling unit of the packing device includes, for example, a heating unit that heats the heat-shrinkable films disposed at both end portions of the plurality of glass tubes G1. The heat-shrinkable films are shrunk by the heating unit of the packing device, so that the plurality of glass tubes G1 can be bundled.

### Method of Producing Glass Tube Bundle

Next, a method of producing the glass tube bundle 11 will be described.

The method of producing the glass tube bundle 11 includes an attaching step and a packing step. In the attaching step of the method of producing the glass tube bundle 11, the friction-reducing material 15 is attached to the outer peripheral surfaces of the plurality of glass tubes G1. In detail, in the attaching step, the friction-reducing material 15 supplied from the friction-reducing material supply unit 18 of the device 16 for producing the glass tube bundle is attached to the outer peripheral surfaces of the glass tubes G1. The attaching step of the present embodiment is performed on the plurality of glass tubes G1 conveyed by the conveyor devices 17.

In the packing step of the method of producing the glass tube bundle 11, the plurality of glass tubes G1 to which the friction-reducing material 15 has been attached, that is, the plurality of friction-reducing-material-attached glass tubes G2 are bundled with the packing member 13. As a result, the above-described glass tube bundle 11 can be produced.

### Operations and Effects of the Present Embodiment

Next, the operations and effects of the present embodiment will be described.
(1) The glass tube bundle 11 includes the plurality of glass tubes G1 and the packing member 13 that bundles a plurality of the glass tube groups 12. The glass tube bundle 11 includes the friction-reducing material 15 attached to the outer peripheral surfaces of the plurality of glass tubes G1. According to this configuration, for example, the frictional resistance between the plurality of glass tubes G1 of the glass tube bundle 11 can be reduced by the friction-reducing material 15. This can suppress the occurrence of scratches on the outer peripheral surfaces of the glass tubes G1. Therefore, for example, the occurrence of cracks in the glass tubes G1 can be suppressed.
(2) The friction-reducing material 15 of the glass tube bundle 11 preferably includes a friction-reducing material made of an organic material. This is because, for example, an impact applied to the glass tubes G1 can be absorbed due to the flexibility of the friction-reducing material 15. In addition, when each glass tube G1 is processed into a pharmaceutical container such as a vial, the friction-reducing material 15 is removed by combustion due to heat required for the processing. Thus, it is easy to avoid the friction-reducing material 15 from remaining as a residue in the pharmaceutical container serving as a final product.
(3) For example, the glass tube bundle 11 can be manufactured continuously through a forming step of forming each glass tube G1 from molten glass or a fire polishing step of rounding the end portions of the glass tube G1 by heating. At this time, at least a part of the glass tube G1 may have a relatively high temperature of, for example, 100 °C or more or 150 °C or more. The outer peripheral surface of the glass tube G1 having such a relatively high temperature is easily scratched by contact. The above-described glass tube bundle 11 is particularly advantageous in terms of suppressing the occurrence of scratches on the outer peripheral surfaces of the glass tubes G1 having a relatively high temperature. In such a method of producing the glass tube bundle 11, the friction-reducing material 15 preferably has a heat resistance of 200 °C or more. In this case, in the attaching step, even when the glass tubes G1 have a relatively high temperature, the friction-reducing material 15 is less likely to be burned on the glass tubes G1. Therefore, the friction-reducing material 15 can be easily removed from the outer peripheral surfaces of the glass tubes G1 by washing in a subsequent step. In addition, since the shape of the friction-reducing material 15 is easily maintained, it is possible to suppress a decrease in the performance of the friction-reducing material 15 attached to the outer peripheral surfaces of the glass tubes G1.
(4) The friction-reducing material 15 of the glass tube bundle 11 preferably includes fibers. In this case, the above-described effect based on the friction-reducing material 15 can be obtained, and the friction-reducing material 15 can be formed of, for example, an inexpensive material.
(5) The friction-reducing material 15 of the glass tube bundle 11 preferably includes cotton. This is because the effects described in the above paragraphs (2), (3), and (4) can be obtained.
(6) The friction-reducing material 15 of the glass tube bundle 11 is preferably attached to a position within 50 mm from an opening end of each of the plurality of glass tubes G1. In the outer peripheral surface of the glass tube G1, the end portion in the longitudinal direction is likely to rub against, for example, the end portion of the adjacent glass tube G1. Therefore, by attaching the friction-reducing material 15 at the above-described position, the glass tube G1 can have the reduced frictional resistance of the end portion that is easily rubbed. This can suppress the occurrence of scratches at the end portion of the glass tube G1.
(7) In the glass tube bundle 11, the friction-reducing material 15 is preferably disposed between the adjacent glass tubes G1. This is because the occurrence of scratches on the outer peripheral surfaces of the glass tubes G1 can be further suppressed.
(8) The friction-reducing material 15 is preferably attached to each glass tube G1 circumferentially. This is because the occurrence of scratches on the outer peripheral surfaces of the glass tubes G1 can be further suppressed.
(9) The friction-reducing-material-attached glass tube G2 includes the glass tube G1 and the friction-reducing material 15 attached to the outer peripheral surface of the glass tube G1. According to this configuration, the frictional resistance between the glass tube G1 and another member can be reduced by the friction-reducing material 15. This can suppress the occurrence of scratches on the outer peripheral surface of the glass tube G1. Therefore, for example, the occurrence of cracks in the glass tube G1 can be suppressed.
(10) The method of producing the glass tube bundle 11 includes the attaching step of attaching the friction-reducing material 15 to the outer peripheral surfaces of the plurality of glass tubes G1, and the packing step of bundling, with the packing member 13, the plurality of glass tubes G1 to which the friction-reducing material 15 has been attached. According to this method, by attaching the friction-reducing material 15 to the outer peripheral surfaces of the plurality of glass tubes G1, for example, the frictional resistance between the adjacent glass tubes G1 can be reduced. This can suppress the occurrence of scratches on the outer peripheral surfaces of the glass tubes G1. Therefore, for example, the occurrence of cracks in the glass tubes G1 can be suppressed.
(11) In the attaching step of the method of producing the glass tube bundle 11, the friction-reducing material 15 may be electrostatically attached to the outer peripheral surfaces of the plurality of glass tubes G1. Here, for example, by using the friction-reducing material 15 having self-adhesiveness, the friction-reducing material 15 can be adhered to the outer peripheral surfaces of the glass tubes G1. However, when the friction-reducing material 15 is electrostatically attached to the outer peripheral surfaces of the glass tubes G1, the friction-reducing material 15 can be easily removed by, for example, washing such as water washing in a subsequent step.
(12) The device 16 for producing the glass tube bundle includes the friction-reducing material supply unit 18 that supplies the friction-reducing material 15 to the plurality of glass tubes G1. According to this configuration, the effect described in the above paragraph (1) can be obtained.
(13) In the device 16 for producing the glass tube bundle, the friction-reducing material 15 includes fibers, and the friction-reducing material supply unit 18 includes the fiber aggregate that comes into contact with the outer peripheral surfaces of the plurality of glass tubes G1. The device 16 for producing the glass tube bundle attaches fibers falling off from the fiber aggregate to the outer peripheral surfaces of the plurality of glass tubes G1. In this case, the fibers can be easily attached to the glass tubes G1.
(14) In the device 16 for producing the glass tube bundle, the fiber aggregate includes the cut surface, and the cut surface of the fiber aggregate is brought into contact with the outer peripheral surfaces of the plurality of glass tubes G1. Fibers constituting such a fiber aggregate easily fall off from the cut surface of the fiber aggregate. Therefore, by bringing the cut surface of the fiber aggregate into contact with the outer peripheral surface of the glass tube G1, the fibers can be efficiently attached to the outer peripheral surface of the glass tube G1.

### Modified Examples

The above embodiment can be implemented while modified as follows. The above-described embodiment and the following modified examples can be implemented in combination with each other within a range where no technical contradiction occurs.
- In the device 16 for producing the glass tube bundle, the fiber aggregate constituting the friction-reducing material supply unit 18 includes the slope portion 18a, but the slope portion 18a can be omitted.
- The friction-reducing material supply unit 18 of the device 16 for producing the glass tube bundle may be a spraying device that sprays the friction-reducing material 15 on the outer peripheral surfaces of the glass tubes G1. That is, in the attaching step of the method of producing the glass tube bundle 11, the friction-reducing material 15 is sprayed on the outer peripheral surfaces of the glass tubes G1, so that the friction-reducing material 15 can be attached to the outer peripheral surfaces of the glass tubes G1.
- The friction-reducing material supply unit 18 of the device 16 for producing the glass tube bundle may be a storage portion in which the friction-reducing material 15 is stored. That is, in the attaching step of the method of producing the glass tube bundle 11, the friction-reducing material 15 stored in the storage portion is brought into contact with the outer peripheral surfaces of the glass tubes G1, so that the friction-reducing material 15 can be attached to the outer peripheral surfaces of the glass tube G1.
- The friction-reducing material 15 may be attached to only the outer peripheral surface of one of both end portions of each glass tube G1. That is, in the attaching step of the method of producing the glass tube bundle 11, the friction-reducing material 15 can be attached to the outer peripheral surface of at least one of both end portions of the glass tube G1. The friction-reducing material 15 may also be attached to the outer peripheral surface of an intermediate portion between both end portions of the glass tube G1.
- The friction-reducing material 15 may be attached to the opening end faces of the glass tubes G1.
- The covering member 14, which is the packing member 13, can be modified to have a configuration of covering the entirety of the plurality of glass tubes G1. The covering member 14 can be modified to have a configuration of covering an intermediate portion between both end portions of the plurality of glass tubes G1.
- The packing member 13 is not limited to the above-described covering member 14, and may be, for example, a pair of string-like members that bundle the glass tube group 12.
- In the attaching step of the method of producing the glass tube bundle 11, the friction-reducing material 15 is attached to the plurality of glass tubes G1 being conveyed. This attaching step may be, for example, a step of attaching the friction-reducing material 15 to the plurality of glass tubes G1 at rest, or may be a step of attaching the friction-reducing material 15 to each glass tube G1 rotated about the tube axis at a fixed position.

### Supplementary Notes

Technical ideas that can be understood from the above embodiment and modified examples will be described.

(Clause 1) A glass tube bundle includes a plurality of glass tubes and a packing member that bundles a plurality of glass tube groups. The glass tube bundle includes fibers attached to the outer peripheral surfaces of the plurality of glass tubes. According to this configuration, for example, the frictional resistance between the plurality of glass tubes of the glass tube bundle can be reduced by the fibers. This can suppress the occurrence of scratches on the outer peripheral surfaces of the glass tubes. Therefore, for example, the occurrence of cracks in the glass tubes can be suppressed.

(Clause 2) A fiber-attached glass tube includes a glass tube and fibers attached to an outer peripheral surface of the glass tube. According to this configuration, the frictional resistance between the glass tube and another member can be reduced by the fibers. This can suppress the occurrence of scratches on the outer peripheral surface of the glass tube. Therefore, for example, the occurrence of cracks in the glass tube can be suppressed.

### [Reference Signs List]

- 11: Glass tube bundle
- 13: Packing member
- 15: Friction-reducing material
- 16: Device for producing the glass tube bundle
- 18: Friction-reducing material supply unit
- G1: Glass tube
- G2: Friction-reducing-material-attached glass tube

## Claims

1. A glass tube bundle comprising:
a plurality of glass tubes;
a packing member that bundles the plurality of glass tubes; and
a friction-reducing material attached to outer peripheral surfaces of the plurality of glass tubes.

2. A glass tube bundle according to claim 1, wherein the friction-reducing material includes a friction-reducing material made of an organic material.

3. A glass tube bundle according to claim 1, wherein the friction-reducing material has a heat resistance of 200 °C or more.

4. A glass tube bundle according to claim 1, wherein the friction-reducing material includes fibers.

5. A glass tube bundle according to claim 4, wherein each of the fibers of the friction-reducing material has a fiber length in a range of 0.1 µm or more and 10000 µm or less, and a fiber diameter in a range of 0.1 µm or more and 1000 µm or less.

6. A glass tube bundle according to claim 5, wherein the friction-reducing material includes cotton.

7. A glass tube bundle according to claim 1, wherein the friction-reducing material is attached at a position within 50 mm from an opening end of each of the plurality of glass tubes.

8. A glass tube bundle comprising:
a plurality of glass tubes;
a packing member that bundles the plurality of glass tubes; and
fibers attached to outer peripheral surfaces of the plurality of glass tubes.

9. A friction-reducing-material-attached glass tube comprising:
a glass tube; and
a friction-reducing material attached to an outer peripheral surface of the glass tube.

10. A method of producing a glass tube bundle including a plurality of glass tubes and a packing member that bundles the plurality of glass tubes, the method comprising:
an attaching step of attaching a friction-reducing material to outer peripheral surfaces of the plurality of glass tubes; and
a packing step of bundling, with the packing member, the plurality of glass tubes to which the friction-reducing material has been attached.

11. A method of producing a glass tube bundle according to claim 10, wherein in the attaching step, the friction-reducing material is electrostatically attached to the outer peripheral surfaces of the plurality of glass tubes.

12. A method of producing a glass tube bundle according claim 10 or 11, wherein, in the attaching step, the friction-reducing material is attached at a position within 50 mm from an opening end of each of the plurality of glass tubes.

13. A device for producing a glass tube bundle including a plurality of glass tubes and a packing member that bundles the plurality of glass tubes, wherein the glass tube bundle includes a friction-reducing material attached to outer peripheral surfaces of the plurality of glass tubes, the device comprising:
a friction-reducing material supply unit that supplies the friction-reducing material to the plurality of glass tubes.

14. A device for producing a glass tube bundle according to claim 13, wherein
the friction-reducing material includes fibers,
the friction-reducing material supply unit includes a fiber aggregate that comes into contact with the outer peripheral surfaces of the plurality of glass tubes, and
the device is configured to attach fibers falling off from the fiber aggregate to the outer peripheral surfaces of the plurality of glass tubes.

15. A device for producing a glass tube bundle according to claim 14, wherein the fiber aggregate includes a cut surface, and wherein the cut surface of the fiber aggregate is brought into contact with the outer peripheral surfaces of the plurality of glass tubes.
